# EUROPEAN PATENT SPECIFICATION

(11) **EP 1 568 267 B1**
(45) Date of publication and mention of the grant of the patent: **11.04.2007**
(21) Application number: 04077312.9
(22) Date of filing: 13.08.2004
(51) Int. Cl.: A01G 7/00

(54) **Method of growing and/or harvesting ever-bearing and day-neutral Fragaria plants, and plants and fruit obtained with the said method**
Verfahren zum Züchten und/oder Ernten von immer tragenden und tagesunabhängigen Fragaria-Pflanzen, und mit diesem Verfahren erzeugten Pflanzen und Früchte.
Méthode de croissance et/ou de récolte de plantes Fragaria toujours portantes et indépendantes de la journée, ainsi que plantes et fruits obtenus par cette méthode

(30) Priority: 27.02.2004 NL 1025591
(43) Date of publication of application: 31.08.2005
(73) Proprietor: El Santa Beheer B.V., 8307 PJ Ens (NL)
(72) Inventor: Suiker, Marcellus Emanuel, 1613 KJ Grootebroek (NL)
(74) Representative: Grootscholten, Johannes A.M.

(56) References cited:
- US-A- 5 095 414
- US-A- 5 642 587
- US-A1- 2003 182 856

## Description

The present invention relates to a method of growing and/or harvesting ever-bearing and day-neutral Fragaria plants, plants grown according to the method, and fruits obtained thereby.

Preceding a discussion of the prior art and disclosure of the invention, first clarified is the cultivar classification for identifying the Fragaria plants to which the present invention relates.

Strawberry cultivars are traditionally classified on the basis of their flowering (and fruiting) patterns, although the wide range of behaviour found amongst cultivars has led to some debate as to the most appropriate classification system to be used. Until twenty years or so ago, cultivars were classified as either 'June-bearing' plants, which produce a single flush of flowers per year (single cropping) in northern temperature climates, or 'ever-bearing' plants, which produce several flushes of flowers in the growing season (multiple cropping). The classification situation was more recently complicated by the proposed introduction of a further category, the 'day-neutrals, by Bringhurst and Voth (1980), to describe multiple cropping cultivars which derived from crosses between JB types and F.virginiana spp. Glauca. Darrow and Waldo (1934) had originally described 'ever-bearing' plants as long-day (LD) plants (LDP), and some authors (Durner et al., 1984; Durner and Poling, 1988) have contended that June-bearing, Ever-bearing and Day-neutral represented three distinct classes. However, this classification has even more recently been contested by other experts in the field of Fragaria cultivation (Nicoll and Galleta, 1987; Galletta and Bringhurst, 1990), who supported Darrow's (1966) view, that cultivars display a continuum of temperature-conditioned photo-periodic flower bud initiation levels, form obligate single-cropping to continuous flowering forms, and thus preclude rigid classification. Although yet another category, the so-called "infra short-day" (ISD) type, has most recently been described (Izhar, 1997), their reported sensitivity to photo-period and temperature would fit within a continuum response. Nicoll an Galletta (1987) suggest that the terms 'ever-bearing' and 'day-neutral' can be used interchangeably to describe multiple flowering/cropping cultivars.

Reference is further made to Taylor, D.R., "The Physiology of Flowering in Strawberry", UK, 2002, and Proc. 4th Int.Strawberry Symp. Eds. T.Hietaranta et al, Acta Hort 567, ISHS 2002. p. 245-250.

The present invention relates to a method of growing ever-bearing and day-neutral Fragaria plants, these denotations being employed in accordance with the proposals from Nicoll and Galletta (1987), according to whom the identifications 'ever-bearing' and 'day-neutral' plants both describe multiple flowering/cropping cultivars, which expressions are used interchangeably herein below.

It is known of said plants, that the continuous crop therefrom is mainly harvested from roughly middle July well to the end of September or ultimately when the first night frost occurs. Prior to harvesting from the 'ever-bearing' and 'day-neutral' plants, crops of specifically strawberries were harvested from other types of plants, in particular the above mentioned 'June-bearing' plant types, that provide crops for harvesting earlier in the year, mainly in May and June, especially in regions with a climate in which the June-bearing plants go dormant, especially in winter, under natural uninfluenced circumstances.

According to the prior art, generally employed hitherto, 'ever-bearing' and 'day-neutral' plants were periodically, e.g. in winter, with no special effort subjected to natural environmental circumstances, such as lower temperatures - they were left in the cold - and shorter light hours, e.g. in winter, in which these plants go dormant. The skilled person did not seek to attempt any change in this growth method of agriculture, since all through the summer months crops of particularly strawberries were available to meet the demands, especially with also the crops from the June-bearing plants, that were harvested earlier in the season, before those of the ever-bearing or day-neutral plants, especially in May and/or June.

However, in order to provide crops for harvesting all through the season, the technical field relied on these two types of plants for crops all through the relevant summer months. This implied that produce was harvested at different farms on different locations for different parts of the relevant season. It is noted that between production crops from June-bearing plants and that from Ever-bearing and/or Day neutral plants a "dip" in total production even occurs from mid June to mid July. Previously, a selected number of June-bearing plants were kept dormant, e.g. by chilling with ice, freezing in cold storage or the like, to initiate crops therefrom later and thus close this gap in time with a dip in production. This is considered, at least by the inventors of the present invention, to be highly inefficient. Both types of June-bearing plants and Ever-bearing/Day-neutral plants were in winter allowed to go dormant under the reigning circumstances, e.g. in winter, while subsequently in spring and summer crops were harvested from these different types of plants. In this context it is noted, that June-bearing plants indeed are proven to require a period of dormancy, especially those plant varieties grown in geographically more northerly regions, for them to yield a good crop in spring or early in summer. The same was at least believed of the Ever-bearing/Day-neutral plants.

The present invention has for an object to obviate or at least diminish the drawbacks of the prior art, for which a method according to claim 1 is provided.

By employing the method according to the present invention, at least in the gap in time from mid June to mid July previously exhibiting a dip in total production, the production in total can be raised, or the need for the June bearing plant varieties for early production could possibly be obviated entirely, relying in part or entirely on the earlier production crops from the Ever-bearing and/or Day Neutral plant varieties which earlier initial crops result from the present invention.

To explain the benefits of the invention, attention is drawn here to dormancy in plants and the effects thereof on the growth cycle of these plants.

A growth cycle consists of the process starting with the beginning of cell division in the zygote or with branching (initiation of lateral primordia) and ending with flowering/fruiting on the top end of the shoot through vegetative growth with leaf development. This 'one bud - one growth cycle theory' appears to be applicable to the diverse growth behaviours and morphologies described in various plant species.

Dormancy is considered as the regulation imposed on the progressing growth processes at various stages (during vegetative growth, during flower formation and anthesis, ect.) with or without morphological modification. Induction of dormancy is, therefore, defined as 'the change of the primordia that cease growing for a while or that initiate special organs instead of producing shoots'.

Vegetative growth, flower initiation and flowering, fruiting are the essentials for the plant to maintain the species eternally. Environmental changes (cold winter) brought about diverse growth phenomena to survive unfavourable conditions. The induction phenomenon of dormancy in plants is a form of a strategy to survive. Shape, position on plants, and the inducing factors are secondary differences.

Dormancy is not only 'a temporary suspension of visible growth of any structure containing a meristem'(Lang et al., 1987), it also includes the 'dynamic' change of growth of the primordia to initiate and develop special dormant organs before the temporary suspension of visible growth. Dormancy limits the continuity of the growth cycle genetically and environmentally; it forces the next growth cycle to wait for the following growing season.

Reference is made to for instance Viémont, J.D., Crabbé, J., "Dormancy in plants, from whole Plant behaviour to Cellular control", France, 2000. p. 1-21.

Further, Smeets, L. in 1982 looked at the effect of chilling on runner formation and flower initiation in the Ever-bearing strawberries, see Smeets, L., 1982, in the Scientia Hortic., 17:43-48. It was concluded that (1) chilling induces runner formation, but can be replaced by high temperature, and (2) chilling delays flower initiation. It was also explained why Ever-bearing plants grown in the open do not start initiating flowers before the end of May or the beginning of June and hence do not initiante flowers in the spring, while under comparable conditions in late summer and autumn flowers are initiated (Waldo, 1930; Robertson, 1955). Further reference is made to Smeets, L., "Effect of temperature and daylength on flower initiation and runner formation in two everbearing strawberry cultivars", The Netherlands, 1979, and also "Effect of chilling on runner formation and flower initiation in the everbearing strawberry", The Netherlands, 1981.

In the present invention it is found that dormancy is not only is a temporary suspension of visible growth but also a change of growth of the primordia. The change of growth of the primordia makes it impossible for everbearing and day-neutral varieties, when grown in the open, to initiate flowers with re-growth in spring - in other words after a period of dormancy, but in which dormancy is actually not prevented.

Further, especially regarding Dormancy in strawberry plants it is noted that a rest period is induced in strawberries by short days and low temperatures (Darrow, 1936). The inductive short day period is 4-6 weeks (Guttridge, 1985). A chilling requirement (-1 to 10°C) has to be met to break the dormancy period: temperatures around 0°C appear to be the most effective (Guttridge, 1985). Cultivars with different regional adaptations vary widely in their chilling requirements.

Reference is made here to Hancock, J.F., "Strawberries", USA, 1999, p. 99. Galletta and Bringhorst used temperatures below 7,2 °C to fulfill chilling requirements, as reported by Hancock, J.F., "Strawberries", USA, 1999, p. 114.

Bigey attempted to determine chilling requirements of strawberry cultivars using either a number of hours with temperatures below 7°C or a number of days with temperatures below 8 °C. It is believed that high temperatures, for example above 20 °C, cancel the benefit of chilling received. Reference is made to Bigey, J., "Chilling Requirements and Compenstation for the Lack of Chilling in Strawberry", France, 2002, and to Proc. 4th Int. Strawberry Symp. Eds. T.Hietaranta et al. Acta Hort 567, ISHS 2002, p. 269 - 272.

The present invention is directed at preventing dormancy in the growth cycle of ever-bearing and day-neutral strawberry plants and the beneficial influence thereof on the cropping cycle. Chilling temperatures in the range -1 till 10 °C are considered to induce dormancy, especially temperatures below 8 and 7 °C.

Below embodiments of methods according to the present invention are discussed, exclusively by way of non-limiting examples, by reference to the accompanying drawings, of which:
Fig. 1 shows a table of crop results for a selected number of plant species according to the present invention; and
Fig. 2-5 graphs of the results corresponding with the table in fig. 1.

Here a first method as an embodiment of the present invention will be discussed.

As plant material subjected to the method the everbearing and day-neutral plant varieties of Frageria, such as 'Aromas', 'Diamante', 'Everest' and 'Evie-2', were used in an experiment. In a confidential experiment to substantiate the validity of the present invention, plants, which were progagated in 2002 and grown in the open field, were potted in 7-cm trays filled with peat on 2 November 2002.

The treatment was carried out and intended to prevent (the induction of) dormancy. After planting, from 2 November onwards, the plants were grown in a glasshouse in natural daylight. Temperature was controlled at a minimum of 10°C by day and 6°C at night. Since in winter the day temperature outside is higher, and the average twenty-four hour temperature in the glasshouse is then approx. +8°C still, by such day-night temperature variations, heating fuel consumption can be minimised while still efficiently preventing dormancy. Any range of temperatures can be usable, dependent on the specific plant species, within the range of e.g. -4 to 30°C, where it is of primary importance that temperatures are varied such, e.g. periodically on a daily basis, that dormancy is effectively prevented. For instance, if a night time temperature is chosen as or set at 0°C then the daytime temperature should be sufficient to prevent dormancy from occurring.

After the treatment plants were planted outside on raised beds. The first planting was at 7 March and the second planting at 17 March 2003. Before planting, plants were placed outside for a week to harden off, i.e. adjust to the outside circumstances.

As control, standard frigo plants, were planted. The frigo plants were lifted of the propagation field, i.e. the location of fruit production, under fully dormant conditions in December 2002.

Plants were thereafter grown under standard cultural practise. Of the frigo plants the 'winter flowers' were removed, which was not done with the treated plants.

Plants were harvested twice a week from early June till the end of September 2003 and total kilogram production was recorded.

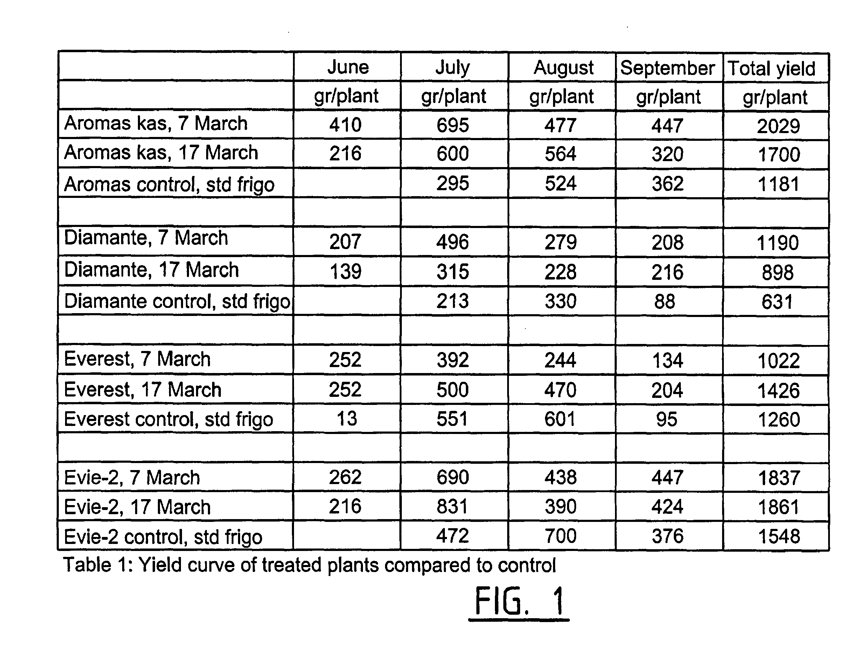

Treated plants showed flowers at the moment of planting and kept on making new flowers till the end of the experiment. Most of the early flowers, present on the plants, were frozen by night frost. The treated plants started their fruit production early in June, about 1 month earlier than the control plants, which is apparent from the table of fig. 1.

Of the control plants, new flowers were not directly formed after removal of the 'winter flowers' which were initiated in the previous autumn. The later start of initiating new flowers delayed the start of continuous production, especially relative to the treated plants that were subjected to the method according to the present invention.

The production cycle of the treated plants was very irregular, with 3 to 4 peaks in fruit production.

The production cycle of the control was built up more regular with a clear peak of production in August.

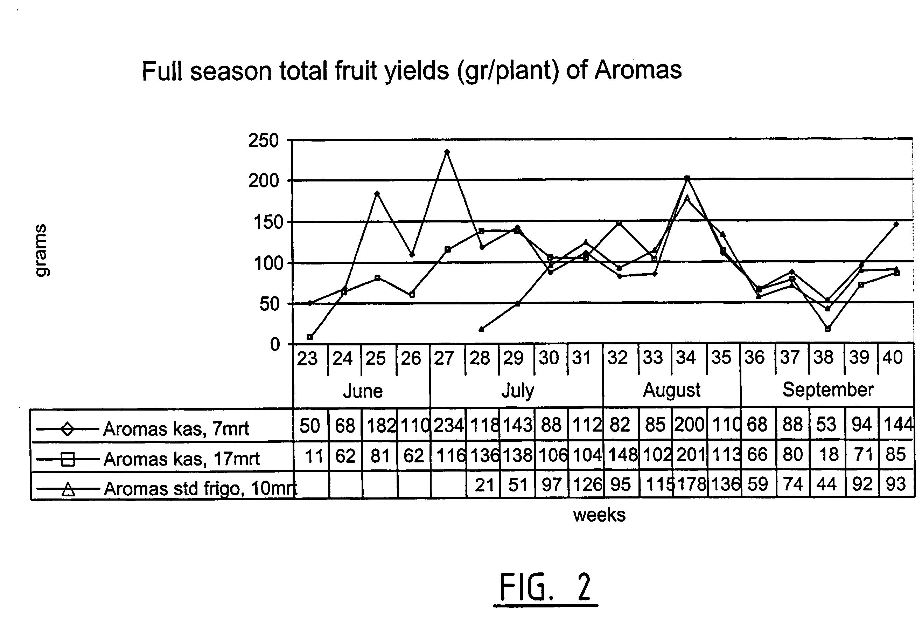

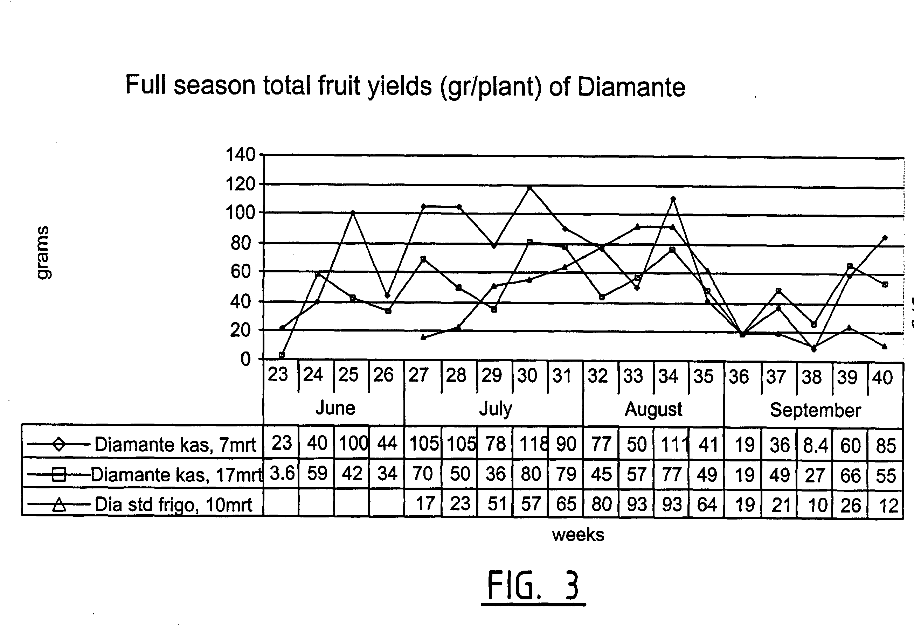

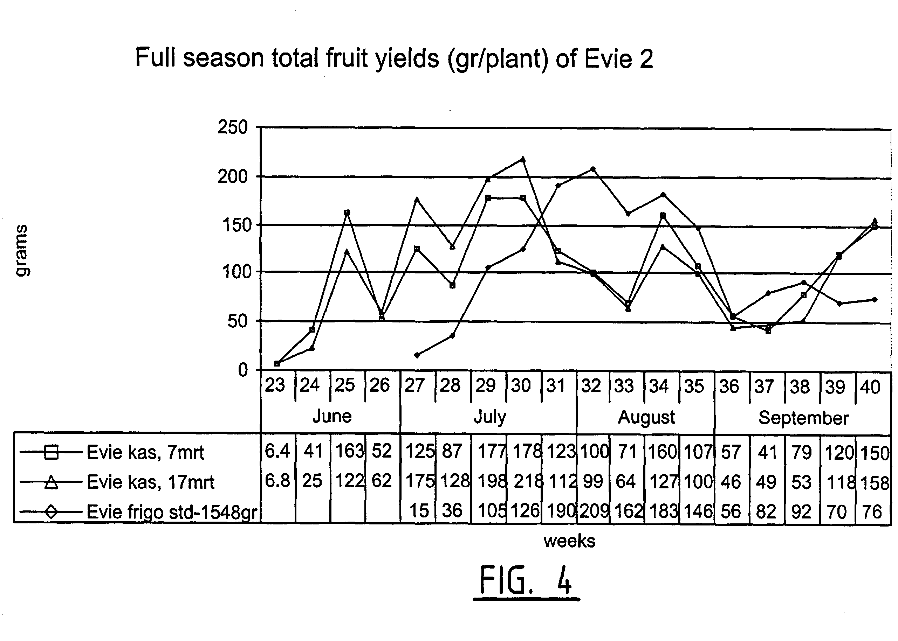

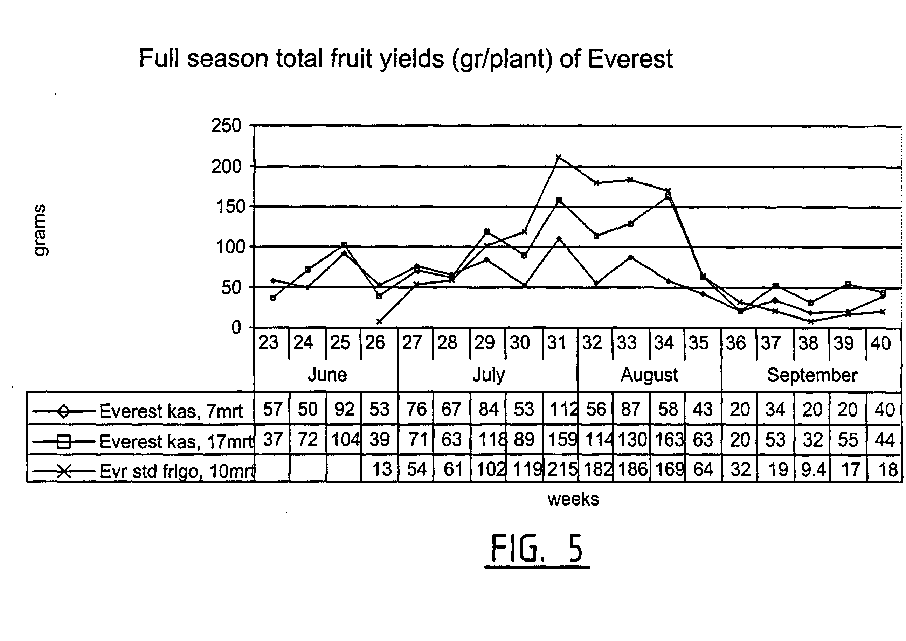

Graphs of the fruit production cycles of the different varieties are enclosed as figures 2-5.

The ever-bearing and/or day-neutral plants, in which dormancy was prevented in accordance with the present invention started their continuous fruit production earlier compared to plants which had been allowed to go dormant. This can be explained by the continuation of the growing cycle of the treated plant which has not been interrupted by the winter. The 'dynamic' change of the growth of the primordia, induced by dormancy has not occurred.

Because of the prevention of (the induction of) dormancy in the treated strawberry plants, they are able to continue to initiate flowers in spring, resulting in a month earlier start of the fruit harvest.

It is noted here that the present invention is not limited in any way to the exemplary embodiment described herein above, but only to the definitions according to the appended claims.

For instance, the Fragaria plants to which the present invention relates, can be different from the explicitly named varieties. Prevention of the occurrence of dormancy could be envisaged and/or embodied alternatively or additionally also by way of control over light conditions.

As already indicated, the circumstances for preventing dormancy can vary per plant variety, so that the explicitly described manners and means for achieving this goal can be very different for other plant varieties than the explicitly identified varieties.

## Claims

1. A method of growing and/or harvesting Ever-bearing and Day-neutral Fragaria plants,
**characterised by**
preventing dormancy in said ever-bearing and day-neutral Fragaria plants by altering conditions, comprising light and temperature, to which the plants are subjected, under which dormancy is prevented relative to the normal conditions at a subsequent production location, and subjecting or resubjecting said plants to normal conditions at the subsequent production location at a time, at which the normal conditions no longer induce dormancy.

2. The method according to claim 1, further comprising the step of moving ever-bearing and day-neutral Fragaria plants - after dormancy thereof is prevented - to fruit production locations, on which locations the ever-bearing and day-neutral Fragaria plants would previously have gone dormant under natural conditions.

3. The method according to claim 2, where the fruit production location is in the open air or in a protected environment, such as a tunnel, on a location with a climate, in which the said plants go dormant in winter under the normal natural conditions.

4. The method according to claim 1, 2 or 3, wherein dormancy is prevented by an average twenty-four-hours temperature regime which is higher than the temperature regime which would occur under natural conditions at the said production location, and sufficiently high to prevent dormancy.

5. The method according to claim 4, wherein the twenty-four-hours temperature regime to prevent the occurrence of dormancy, is set in dependence upon the specific individual variety of the Ever-bearing or Day-neutral plant, that is subjected to the method.

6. The method according to claim 4 or 5, where the average temperature is minimally about 7°C.

7. The method according to claim 4, 5 or 6, wherein the twenty-four-hours temperature regime to prevent dormancy, comprises variations between -5°C and 30°C with the purpose of the higher temperature to compensate for or break dormancy that would, without the higher temperature be induced by the lower temperature.

8. The method according to claim 7, where the variations are periodical, with the higher temperatures corresponding with day-time and the lower temperatures corresponding with night-time.

9. The method according to claim 2, or any other claim directly or indirectly dependent on claim 2, where - in order to prevent dormancy - the plants are moved from the fruit production location to a controlled environment before the conditions at the production location are such that dormancy is induced.

10. The method according to claim 2, or any other claim directly or indirectly dependent on claim 2, where - in order to prevent dormancy - the plants are grown at a location where dormancy does not occur, and are subsequently moved to the production location.

11. Ever-bearing or Day-neutral Fragaria plants subjected to a method according to claim 1 which are able to initiate continuous fruiting cycle thereof about 1 month earlier as a result of the method, compared to untreated plants of which dormancy is not prevented.

12. Strawberry fruits produced by the ever-bearing and day-neutral Fragaria plants according claim 11, that are subjected tot a method according to any one of the claims 1 to 10.

13. Strawberry fruits grown by a method of growing according to any one of the claims 1 to 10.

## Patentansprüche

1. Verfahren zum Anbau und/oder der Ernte von "immer tragenden" und "Erntetag neutralen" Erdbeerpflanzen, **dadurch gekennzeichnet, dass**
die Keimruhe in den "immer tragenden" und "Erntetag neutralen" Erdbeerpflanzen durch die Veränderung der Bedingungen wie Licht und Temperatur unterbunden wird, denen die Pflanzen ausgesetzt werden, unter denen die Keimruhe im Verhältnis zu den normalen Bedingungen an einer späteren Produktionsstätte unterbunden wird, und die Pflanzen normalen Bedingungen an einer späteren Produktionsstätte zu einem Zeitpunkt ausgesetzt oder entzogen werden, an dem die normalen Bedingungen nicht mehr länger die Keimruhe einleiten.

2. Verfahren gemäß Anspruch 1, weiterhin den Schritt umfassend, die "immer tragenden" und "Erntetag neutralen" Erdbeerpflanzen - nachdem deren Keimruhe unterbunden wurde - an Fruchtproduktionsstätten zu bringen, wo die immer tragenden und von der Lichteinstrahlungsdauer unabhängigen Erdbeerpflanzen zuvor unter natürlichen Bedingungen in die Ruhephase übergegangen wären.

3. Verfahren gemäß Anspruch 2, bei dem die Fruchtproduktionsstätte sich unter freiem Himmel oder in einer geschützten Umgebung, wie einem Tunnel, an einem Ort mit einem Klima befindet, in dem die Pflanzen im Winter unter natürlichen Bedingungen in den Ruhezustand übergehen.

4. Verfahren gemäß Anspruch 1, 2 oder 3, wobei die Keimruhe durch ein durchschnittlich 24-stündiges Temperatursystem unterbunden wird, das über dem Temperatursystem liegt, das unter normalen Bedingungen an der Produktionsstätte auftreten würde und ausreichend hoch ist, um die Keimruhe zu unterbinden.

5. Verfahren gemäß Anspruch 4, wobei das vierundzwanzigstündige Temperatursystem zur Unterbindung des Eintretens der Keimruhe in Abhängigkeit von der speziellen
individuellen Sorte der "immer tragenden" und "Erntetag neutralen" Erdbeerpflanzen eingerichtet wird, die diesem Verfahren unterzogen werden.

6. Verfahren gemäß Anspruch 4 oder 5, wobei die Durchschnittstemperatur mindestens etwa 7°C beträgt.

7. Verfahren gemäß Anspruch 4, 5 oder 6, wobei das 24-stündige Temperatursystem zur Unterbindung der Keimruhe Variationen zwischen -5°C und 30°C umfasst, mit dem Zweck, dass die höhere Temperatur die Keimruhe ausgleicht oder unterbricht, die ohne die höhere Temperatur durch die niedrigere Temperatur eingeleitet werden würde.

8. Verfahren gemäß Anspruch 7, wobei die Variationen periodisch sind, wobei die höheren Temperaturen der Tageszeit und niedrigere Temperaturen der Nachtzeit entsprechen.

9. Verfahren gemäß Anspruch 2 oder einem anderen Anspruch, der direkt oder indirekt von Anspruch 2 abhängt, wobei - zur Unterbindung der Keimruhe - die Pflanzen von der Fruchtproduktionsstätte in eine kontrollierte Umgebung gebracht werden, bevor die Bedingungen an der Produktionsstätte so werden, dass die Keimruhe eingeleitet wird.

10. Verfahren gemäß Anspruch 2 oder einem anderen Anspruch, der direkt oder indirekt von Anspruch 2 abhängt, wobei - zur Unterbindung der Keimruhe - die Pflanzen an einer Stätte angebaut werden, in der die Keimruhe nicht auftritt, und später zur Produktionsstätte gebracht werden.

11. "Immer tragende" und "Erntetag neutrale" Erdbeerpflanzen, die einem Verfahren gemäß Anspruch 1 unterzogen werden, die in der Lage sind, als Ergebnis des Verfahrens fortlaufende Fruchtragezyklen einen Monat früher zu beginnen, im Vergleich zu unbehandelten Pflanzen, bei denen die Keimruhe nicht unterbunden wird.

12. Erdbeerfrüchte, die von den "immer tragenden" und "Erntetag neutralen" Erdbeerpflanzen gemäß Anspruch 11 produziert werden, die einem Verfahren gemäß einem der Ansprüche 1 bis 10 unterzogen werden.

13. Erdbeerfrüchte, die nach einem Anbauverfahren gemäß einem der Ansprüche 1 bis 10 angebaut werden.

## Revendications

1. Procédé de culture et/ou de cueillette de plants de Fragaria "Ever-bearing" et "Day-neutral"
**caractérisé par**
la prévention de la période de dormance chez lesdits plants de Fragaria Ever-bearing et Day-neutral en modifiant les conditions, comprenant la lumière et la température, auxquelles les plants sont soumis, de telle façon que la période de dormance est évitée par rapport aux conditions normales sur un lieu de production ultérieur, et en soumettant ou en re-soumettant lesdits plants à des conditions normales sur le lieu de production ultérieur à une époque où les conditions normales n'induisent plus de dormance.

2. Procédé selon la revendication 1 comprenant, en outre, l'étape consistant à déplacer les plants de Fragaria Ever-bearing et Day-neutral - après que leur période de dormance a été évitée - sur les sites de production des fruits, sur lesquels les plants de Fragaria Ever-bearing et Day-neutral seraient, avant, entrés en dormance dans des conditions naturelles.

3. Procédé selon la revendication 2, où le site de production des fruits est dans un environnement à ciel ouvert ou protégé, tel qu'une serre de type tunnel, ou un site ayant un climat, sous lequel lesdits plants entrent en dormance en hiver dans des conditions naturelles normales.

4. Procédé selon la revendication 1, 2 ou 3, dans lequel la période de dormance est évitée par un régime de températures sur 24 heures moyen qui est supérieur au régime qui aurait régné dans des conditions naturelles sur ledit site de production, et suffisamment élevé pour prévenir la dormance.

5. Procédé selon la revendication 4, dans lequel le régime de températures sur 24 heures destiné à prévenir l'occurrence de la dormance est fixé en fonction de la variété individuelle du plant - Ever-bearing ou Day-neutral - qui est soumis au procédé.

6. Procédé selon la revendication 4 ou 5, dans lequel la température moyenne est au minimum d'environ 7°C.

7. Procédé selon la revendication 4, 5 ou 6, dans lequel le régime de températures sur 24 heures destiné à prévenir la dormance, comprend des variations entre -5 et 30°C, une température plus élevée ayant pour objet de compenser ou de rompre la dormance qui, sans cette température plus élevée, aurait été induite par une température plus basse.

8. Procédé selon la revendication 7, dans lequel les variations sont périodiques, les températures plus élevées correspondant aux heures de la journée et les températures plus basses correspondant aux heures de la nuit.

9. Procédé selon la revendication 2, ou toute autre revendication dépendant directement ou indirectement de la revendication 2, dans lequel - pour prévenir la dormance - les plants sont déplacés du site de production des fruits vers un environnement contrôlé avant que les conditions régnant sur le site de production ne soient telles que la dormance est induite.

10. Procédé selon la revendication 2, ou toute autre revendication dépendant directement ou indirectement de la revendication 2, dans lequel - pour prévenir la dormance - les plants sont cultivés sur un site où la dormance ne survient pas et sont, ultérieurement, re-déplacés vers le site de production.

11. Plants de Fragaria Ever-bearing ou Day-neutral soumis au procédé selon la revendication 1 qui sont aptes à démarrer leur cycle de production de fruits continu environ 1 mois plus tôt suite à l'application du procédé, comparé à des plants non traités dont la dormance n'est pas prévenue.

12. Fraises produites par des plants de Fragaria Ever-bearing et Day-neutral selon la revendication 11, qui sont soumises à un procédé selon l'une quelconque des revendications 1 à 10.

13. Fraises cultivées par un procédé de culture selon l'une quelconque des revendications 1 à 10.
